# EUROPEAN PATENT SPECIFICATION

(11) **EP 4 495 482 B1**
(45) Date of publication and mention of the grant of the patent: **28.01.2026**
(21) Application number: 23382761.7
(22) Date of filing: 21.07.2023
(51) Int. Cl.: F23N 1/00

(54) **GAS TAP WITH SAFETY VALVE FOR A GAS COOKING APPLIANCE**
GASHAHN MIT SICHERHEITSVENTIL FÜR EIN GASKOCHGERÄT
ROBINET À GAZ AVEC SOUPAPE DE SÉCURITÉ POUR UN APPAREIL DE CUISSON À GAZ

(43) Date of publication of application: 22.01.2025
(73) Proprietor: Copreci, S.Coop., 20550 Aretxabaleta (ES)
(72) Inventor: ARRIOLA-BENGOA UNZUETA, Imanol, 01193 Erentxun (ES); PEÑAGARICANO BADIOLA, Iñigo, 20700 Urretxu (ES)
(74) Representative: Galbaian S.Coop.

(56) References cited:
- EP-A1- 3 211 309
- EP-A1- 3 828 467
- EP-A2- 2 299 156
- JP-B2- 3 819 307

## Description

### TECHNICAL FIELD

The present invention relates to gas taps with a safety valve for gas cooking appliances and to gas appliances incorporating said gas taps.

### PRIOR ART

Gas taps with a safety valve that regulate gas flow and open the safety valve by means of the rotation of a motor are known. For example JP380357B2 relates to a gas tap with a safety valve comprising a body comprising a gas inlet conduit fluidically connected with the safety valve, a gas outlet conduit, a housing fluidically connected with the safety valve and with said outlet conduit, and a regulating disc arranged in said housing and configured to regulate the gas flow. The gas tap comprises a motor and a gear system arranged outside the body, and a transmission shaft arranged at the outlet of the gear system and introducing adapted movement of the motor in the body. The gas tap comprises a cam coupled to said transmission shaft, said cam being configured to act on the safety valve and open it by means of its rotation. The regulating disc is also coupled to the transmission shaft. EP3211309A1 discloses a regulating valve for a gas cooking appliance with an operating unit connected to a rotating disk, wherein the rotating disk is placed in different angular positions based on the types of gas to be supplied to the cooking appliance.

### DISCLOSURE OF THE INVENTION

The object of the invention is to provide a gas tap with a safety valve for a gas cooking appliance and a gas cooking appliance incorporating said gas tap, as defined in the claims. A first aspect of the invention relates to a gas tap with a safety valve for a gas cooking appliance.

The gas tap with a safety valve comprises a body comprising a gas inlet conduit fluidically connected with the safety valve, at least one gas outlet conduit, and a housing fluidically connected with the safety valve and with said at least one outlet conduit. Furthermore the housing comprises a contact surface comprising at least one outlet hole fluidically connected with said at least one outlet conduit.

The gas tap comprises a regulating disc comprising at least one regulation opening and arranged in the housing of the body over the contact surface, the regulating disc being configured to regulate, by means of its rotation, the incoming gas flow from the safety valve to said at least one outlet conduit.

The gas tap also comprises an actuator element housed in the body and configured to open the safety valve by means of its rotation.

Furthermore, the gas tap comprises a motor comprising an output shaft, and a gear coupled to the shaft of the motor and configured to transmit the movement of the motor to the regulating disc.

The actuator element is a wheel comprising a plurality of teeth, the actuator element being part of the gear. In that sense, the actuator element is an at least partially toothed wheel that is part of the gear that transmits the rotation of the shaft of the motor to the regulating disc. At the same time, the actuator element is configured to open the safety valve by means of its rotation. The actuator element thereby performs a dual function, and a more compact actuation mechanism of the tap with fewer parts can be obtained.

A second aspect of the invention relates to a gas cooking appliance comprising at least one gas tap like the one described in the first aspect of the invention.

These and other advantages and features of the invention will become apparent in view of the figures and the detailed description of the invention.

### DESCRIPTION OF THE DRAWINGS

Figure 1 shows a perspective view of a preferred embodiment of the gas tap of the invention.
Figure 2 shows a second perspective view of the gas tap of Figure 1 without the cover.
Figure 3 shows a first section view of the gas tap of Figure 1.
Figure 4 shows a second section view of the gas tap of Figure 1.
Figure 5 shows a first partial view of the gas tap of Figure 1.
Figure 6 shows a second partial view of the gas tap of Figure 1.
Figure 7 shows the actuator element of the gas tap of Figure 1.
Figure 8 shows the regulating disc of the gas tap of Figure 1.
Figure 9 shows the body of the gas tap of Figure 1.
Figure 10 shows the worm screw of the gas tap of Figure 1.

### DETAILED DISCLOSURE OF THE INVENTION

A first aspect of the invention relates to a gas tap 1 with a safety valve 20 for a gas cooking appliance.

The gas tap 1 of the invention comprises a body 10 comprising a gas inlet conduit 11 fluidically connected with the safety valve 20, at least one gas outlet conduit 12, 13, and a housing 14 fluidically connected with the safety valve 20 and with said at least one outlet conduit 12, 13. The housing 14 comprises a contact surface 140 comprising at least one outlet hole 120, 130 fluidically connected with said at least one outlet conduit 12, 13. Preferably the gas tap 1 comprises between one and three outlet conduits.

Preferably the safety valve 20 is a normally closed solenoid valve housed in a safety conduit 19 of the body 10, said safety conduit 19 being connected with the gas inlet conduit 11. Said safety valve 20 comprises a plug 21, said plug 21 being configured to be displaced between a closed position in which it is arranged on a seating 18 of the safety conduit 19, preventing the gas flow, and a passage position in which the plug 21 is separated from the seating 18, allowing the gas flow from the inlet conduit 11 to the housing 14 through a passage opening 180 connecting the safety conduit 19 with the housing 14 of the body 10. In that sense, when the plug 21 is arranged in the closed position, the safety valve 20 is considered to be closed, whereas when the plug 21 is arranged in the passage position, the safety valve 20 is considered to be open. The safety valve 20 also comprises a spring 22 which causes the plug 21 to be in the closed position. The initial opening of the safety valve 20 is performed by mechanically pushing the plug element 21, separating it from the seating 18, and preferably, during a brief predetermined period of time, the safety valve 20 is electronically powered to keep the safety valve 20 open. Once said period has passed, while the burner associated with the gas tap 1 is on, the corresponding thermocouple keeps the safety valve energized and, accordingly, the plug 21 in the passage position.

The gas tap 1 also comprises a regulating disc 30 comprising at least one regulation opening 31a, 31b. The regulating disc 30 is arranged in the housing 14 of the body 10 over the contact surface 140. The regulating disc 30 is configured to regulate, by means of rotating same, the incoming gas flow from the safety valve 20 to said at least one outlet conduit 12, 13. Preferably, the regulating disc 30 comprises a series of regulation openings 31a, 31b per outlet conduit 12, 13 which allow regulating the gas flow between the housing 14 and the corresponding outlet conduit 12, 13 by means of the rotation of the regulating disc 30. Alternatively, the regulating disc may comprise a single regulation opening per outlet conduit. The regulation of the gas flow occurs when at least one regulation opening 31a, 31b and the corresponding outlet hole 120, 130 are arranged fluidically connected.

Furthermore, the gas tap 1 comprises a motor 80, preferably a BLDC motor, comprising an output shaft 81. A stepper motor or any other low torque motor could also be used.

The gas tap 1 also comprises a gear coupled to the shaft 81 of the motor 80 and configured to transmit the movement of the motor 80 to the regulating disc 30.

The gas tap 1 comprises an actuator element 40 housed in the body 10 and configured to open the safety valve 20 by means of its rotation. Furthermore, the actuator element 40 is a wheel comprising a plurality of teeth 41, the actuator element 40 being part of the gear. Preferably the plurality of teeth 41 are arranged on at least part of the perimeter of the actuator element 40.

In that sense, the actuator element 40 is an at least partially toothed wheel which, in addition to being part of the gear that transmits the rotation of the shaft 81 of the motor 80 to the regulating disc 30, is also configured to open the safety valve 20 by means of its rotation. The actuator element 40 thereby performs a dual function, and an actuation mechanism of the gas tap 1 with fewer parts, and which is therefore simpler and more compact, can be obtained.

In that sense, the gas tap 1 of the invention is a motor-driven gas tap 1 which, by means of the rotation of the motor 80, can on one hand mechanically open the safety valve 20, and on the other hand regulate the gas flow from the inlet conduit 11 to said at least one outlet conduit 12, 13.

Preferably the motor 80 is arranged outside the housing 14 of the body 10, i.e., the motor 80 is arranged outside the area through which the gas circulates. The fact that the motor 80 is arranged outside the housing 14, and therefore outside the gas circuit, prevents the gas tap from having to overcome testing required by law for gas taps in which there is electricity inside a housing through which the gas circulates. Furthermore, the arrangement of the motor 80 outside the housing 14 of the body 10 facilitates the tightness of the gas tap 1, given that in the event that the motor is inside the housing of the body, the cavity to be isolated would increase considerably, and furthermore a system would have to be designed to assure the isolation of the power cables and control of the motor.

Preferably the gear comprises a worm screw 60, said worm screw 60 being coupled to the shaft 81 of the motor 80, and said worm screw 60 engaging with the teeth 41 of the actuator element 40. In that sense, the rotation shaft 600 of the worm screw 60 is arranged perpendicular with respect to the rotation shaft 402 of the actuator element 40. Preferably the body 10 comprises an inlet hole which allows introducing the worm screw 60 inside the body 10. The worm screw 60 thereby comprises a first end arranged outside the body 10, said first end being coupled to the shaft 81 of the motor, and the rest of the worm screw 60 being housed in the body 10. Preferably the gas tap 1 comprises a lip seal 56 arranged surrounding the worm screw 60 and supported against the body 10 to seal the inlet hole and thus maintain the tightness of said inlet port. The tightness required is obtained with the lip seal 56, exercising a friction force on the worm screw 60 that is considerably less than force that would be exerted on said worm screw in the case of using an O-ring commonly used in motor-driven gas taps in which the motor is arranged outside the housing of the body. Taking into account that to obtain a cost-effective solution, it would be of interest to use a motor 80 with a low output torque, the fact that the friction force to be exerted by the lip seal 56 is small is a great advantage.

This type of gear known as a "worm gear" allows reducing the output speed of the motor 80 by increasing the torque in the transmission. A motor 80 with a low output torque can thereby be used, obtaining as a result of the type of gear the torque necessary in the actuator element 40 to cause the opening of the safety valve 20. The motors with a low output torque are usually less expensive, so the use of this type of gear, also in addition to the dual function of the actuator element 40 which allows using fewer parts, makes the gas tap 1 of the invention a less expensive and simpler solution. Furthermore, this type of "worm screw-worm screw wheel" gear requires less space and achieves a greater reduction of speed-increase of output torque than in a gear with parallel shafts, such that the solution of the invention requires a lower number of parts in the transmission system, obtaining a less complex gas tap and facilitating the manufacture, assembly, and operation thereof.

In the worm gear type gears, radial stresses which can cause an imbalance in the movement of the rotor/stator of the motor coupled to the worm screw can be generated, causing the operation of the motor to be less efficient and being able to cause gas leaks in the lip seal 56 located between the body 10 and the worm screw 60. To that end, to minimize these possible radial displacements, preferably the gas tap 1 comprises at least one bushing 54, 55 with little clearance surrounding a part of the worm screw 60, a bushing 54 preferably being arranged after the lip seal 56. Said at least one bushing 54, 55 is housed in a corresponding retention housing of the body 10, such that said at least one bushing 54, 55 keeps the worm screw 60 centered and prevents radial displacement thereof. More preferably, the gas tap 1 comprises a first bushing 54 arranged in a first part 61 of the worm screw 60 and a second bushing 55 arranged in a second part 62 of the worm screw 60, the toothed part 63 of the worm screw 60 being arranged between the first part 61 and the second part 62. Additionally, the gas tap 1 may comprise an axial stop 57 arranged in the body 1, the worm screw 60 comprising a notch 65 cooperating with said axial stop 57 such that the possible axial displacements of the worm screw 60 are also minimized.

Preferably the actuator element 40 comprises a protrusion 42 configured to act indirectly on the plug element 21 of the safety valve 20. Preferably the protrusion 42 is arranged on the perimeter of the actuator element 40 and protrudes radially with respect to the perimeter of said actuator element 40.

Preferably the protrusion 42 can also be used to define a zero position of the regulating disc 30. To that end the protrusion 42 can cooperate with an abutment wall of the body 10 such that when said zero position is to be determined, the actuator element 40 is rotated in a search for zero direction, determining the zero position when the protrusion 42 abuts with the abutment wall that prevents the actuator element 40 from being able to continue rotating in said direction.

Furthermore, preferably the gas tap 1 comprises a lever 70 arranged in the housing 14 and rotationally fixed to the body 10 by means of a rotation shaft 73. The lever 70 is configured to act on the plug element 21 of the safety valve 20 when the rotation of the actuator element 40 causes the protrusion 42 to act on the lever 70. The lever 70 comprises a first radial prolongation 71 configured to cooperate with the actuator element 40, and a second radial prolongation 72 configured to cooperate with the safety valve 20, the rotation shaft 73 being arranged between both radial prolongations 71, 72. In that sense, the second radial prolongation 72 of the lever 70 is configured to act on the plug element 21 of the safety valve 20, opening said safety valve 20 when the protrusion 42 of the actuator element 40 pushes the first radial prolongation 71 of the lever 70. In that sense, the lever 70 is configured to rotate between a standby position and a pushing position in which the second radial prolongation 72 of the lever 70 goes through the passage opening 180, thus separating the plug 21 from the seating 18, allowing the passage of gas from the inlet conduit 11 to the housing 14 through the passage opening 180. The lever 70 amplifies the force transmitted by the actuator element 40 to the plug 21 such that its use as an intermediate element allows exerting the force needed to open the safety valve 20 with a lower torque of the actuator element 40 than if said actuator element 40 were to act directly on the plug 21. The use of the lever 70 thereby causes the torque required of the motor 80 to be able to open the safety valve 20 to be lower. The at least one regulation opening 31a, 31b of the regulating disc 30 is arranged such that when the protrusion 42 of the actuator element 40 is arranged in angular positions of the circular sector in which said protrusion 42 acts on the lever 70, said at least one regulation opening 31a, 31b does not coincide with the at least one outlet hole 120, 130, such that it is ensured that there will be no gas flow while the protrusion 42 acts on the lever 70, i.e., while the plug 21 of the safety valve 20 is operated mechanically, such that in the event of a malfunction, if the actuator element 40 were to be blocked in an angular position in which the plug 21 is operated mechanically by the lever 70, it is ensured that there will be no gas leak.

Preferably the regulating disc 30 is coupled to the actuator element 40 such that both parts rotate integrally, the actuator element 40 being what directly transmits the rotation to the regulating disc 30. To that end, preferably the actuator element 40 comprises a central protrusion 43 and the regulating disc 30 comprises a central hole 32 with a shape complementary to the central protrusion 43 of the actuator element 40, the central protrusion 43 being housed in the central hole 32 such that both parts rotate integrally. Alternatively, the regulating disc can be integrated in the actuator element itself.

Preferably the body 10 comprises a central hole 16 in which a shaft 51 is arranged, and the central protrusion 43 of the actuator element comprises a central hole 430, the shaft 51 going through said central hole 430 such that the actuator element 40 is configured to rotate with respect to said shaft 51.

Preferably the actuator element 40 comprises at least one pressure element 44 that protrudes with respect to the surface 400 of the actuator element 40 which is arranged facing the regulating disc 30, said at least one pressure element 44 being configured to press the regulating disc 30 against the contact surface 140. In that sense, the actuator element 40 also has the function of ensuring proper support of the regulating disc 30 over the contact surface 140 of the housing 14.

Preferably the gas tap 1 comprises a sealing gasket 50 housed in the contact surface 140 surrounding the at least one outlet hole 120, 130, the regulating disc 30 being arranged in a supported manner, pressing on said sealing gasket 50, the sealing gasket 50 ensuring the tightness between the regulating disc 30 and the contact surface 140, such that it is assured that there will only be gas flow to the at least one outlet conduit 12, 13 when at least one regulation opening 31a, 31b and the corresponding outlet hole 120, 130 are arranged fluidically connected.

Preferably the actuator element 40 is axially retained by means of a spring 52 that pushes the actuator element 40 at one of its ends, the other end of the spring 52 being supported in a cover 15 attached to the body 10 that closes the housing 14 of the body 10 in a leak-tight manner. Preferably the gas tap 1 comprises a lower support part 58 manufactured in a low friction material, for example nylon, which is arranged between the actuator element 40 and the spring 52. Preferably the gas tap 1 also comprises an upper support part 58 which is arranged between the cover 15 and the spring 52.

Preferably the gas tap 1 comprises a second sealing gasket 53 arranged between the body 10 and the cover 15.

A second aspect of the invention relates to a gas cooking appliance comprising at least one gas tap 1 like the one described in the first aspect of the invention.

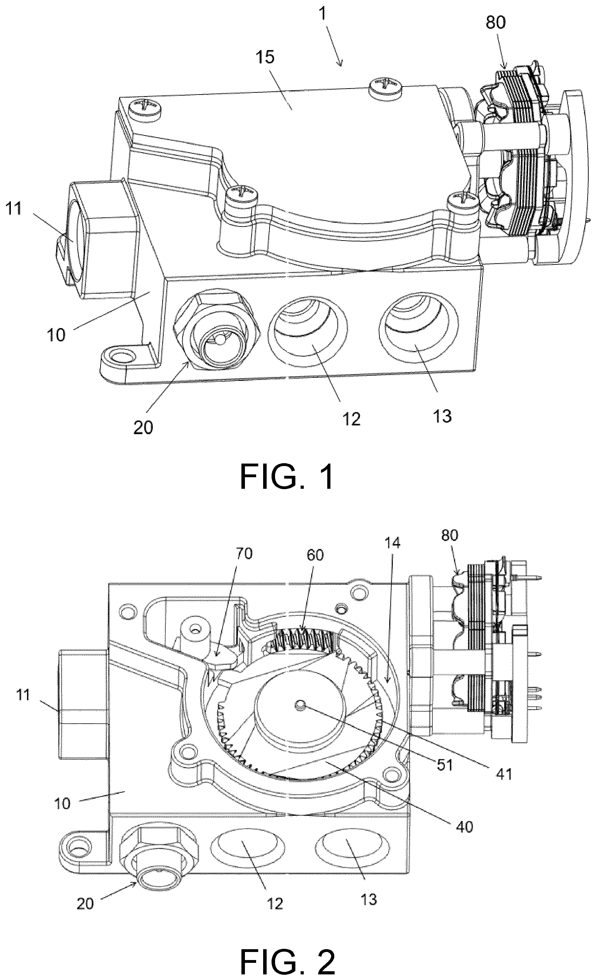

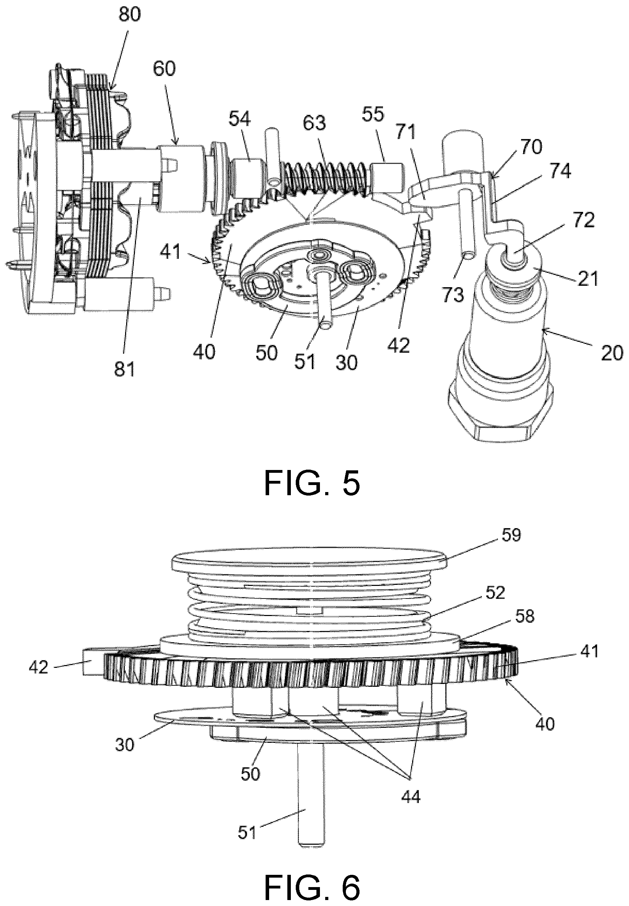

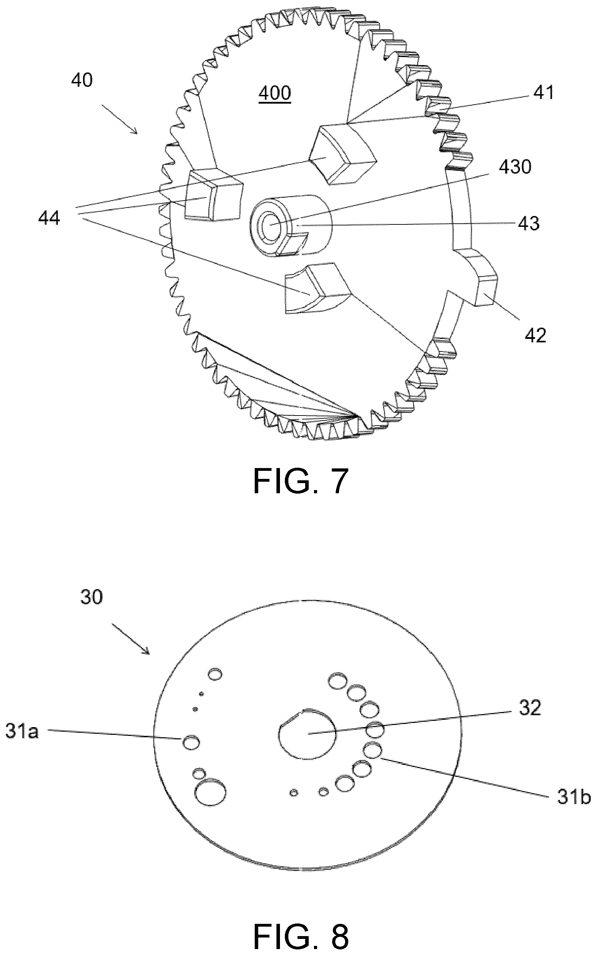

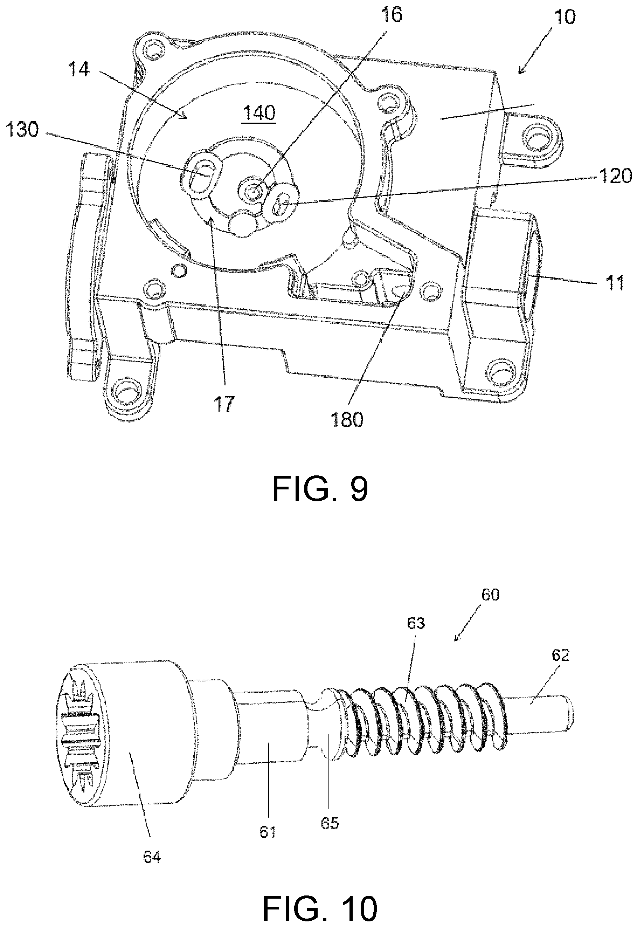

Figures 1 to 9 show a gas tap 1 according to a preferred embodiment of the invention.

In the preferred embodiment the gas tap 1 comprises a body 10 comprising a safety conduit 19 in which a safety valve 20 is arranged, and a gas inlet conduit 11 fluidically connected with said safety conduit 19. The body 10 also comprises two gas outlet conduits 12, 13, and a housing 14 fluidically connected with the safety conduit 19 and with said outlet conduits 12, 13. The housing 14 comprises a contact surface 140 comprising two outlet holes 120, 130, each outlet hole 120, 130 being fluidically connected with the outlet conduit 12, 13 corresponding. Furthermore, the safety conduit 19 comprises a seating 18 comprising a passage opening 180 connecting the safety conduit 19 with the housing 14 of the body 10.

In this preferred embodiment the safety valve 20 is a normally closed solenoid valve. The safety valve 20 comprises a plug 21 configured to be displaced between a closed position in which the plug 21 is arranged on the seating 18 of the safety conduit 19, preventing the gas flow, and a passage position in which the plug 21 is separated from the seating 18, allowing the gas flow from the inlet conduit 11 to the housing 14 through a passage opening 180. The safety valve 20 comprises a spring 22 which causes the plug 21 to be in the closed position. The initial opening of the safety valve 20 is performed by mechanically pushing the plug element 21, separating it from the seating 18 and during a brief predetermined period of time, the safety valve 20 is electronically powered to keep the safety valve 20 open. Once said period has passed, while the burner associated with the gas tap is on, the corresponding thermocouple keeps the safety valve 20 energized and, accordingly, the plug 21 in the passage position.

The gas tap 1 of the preferred embodiment also comprises a regulating disc 30 arranged in the housing 14 of the body 10 over the contact surface 140. The regulating disc 30 is configured to regulate, by means of its rotation, the incoming gas flow from the inlet conduit 11, through the safety valve 20, to the outlet conduits 12, 13. To that end, the regulating disc 30 comprises a first series of regulation openings 31a to regulate the gas flow from the housing 14 of the body 10 to the first outlet conduit 12 through the first outlet hole 120, and a second series of regulation openings 31b to regulate the gas flow from the housing 14 of the body 10 to the second outlet conduit 13 through the second outlet hole 130. The openings of the series of regulation openings 31a, 31b form two rows with a radial shape having a different radius, the radius of the first series of regulation openings 31a being larger than the second series of regulation openings 31b. To obtain the gas flow rate required in the outlet conduits 12, 13, a specific number of openings of the series of regulation openings 31a, 31b of the regulating disc 30 overlap the outlet holes 120, 130.

The gas tap 1 of the preferred embodiment also comprises a BLDC motor 80 arranged outside the housing 14 of the body 10. The motor 80 comprises an output shaft 81.

The gas tap 1 also comprises a gear coupled to the shaft 81 of the motor 80 and configured to transmit the movement of the motor 80 to the regulating disc 30.

The gas tap 1 of the preferred embodiment also comprises an actuator element 40 housed in the body 10 and configured to open the safety valve 20 by means of its rotation. The actuator element 40 is a wheel comprising a plurality of teeth 41 arranged on part of the perimeter of the actuator element 40, the actuator element 40 being part of the gear. In that sense, the actuator element 40 is a partially toothed wheel which, in addition to being part of the gear that transmits the rotation of the shaft 81 of the motor 80 to the regulating disc 30, is also configured to open the safety valve 20 by means of its rotation.

In the preferred embodiment the gear is a "worm gear". In that sense, the gear comprises a worm screw 60 coupled to the shaft 81 of the motor 80, said worm screw 60 engaging with the teeth 41 of the actuator element 40.

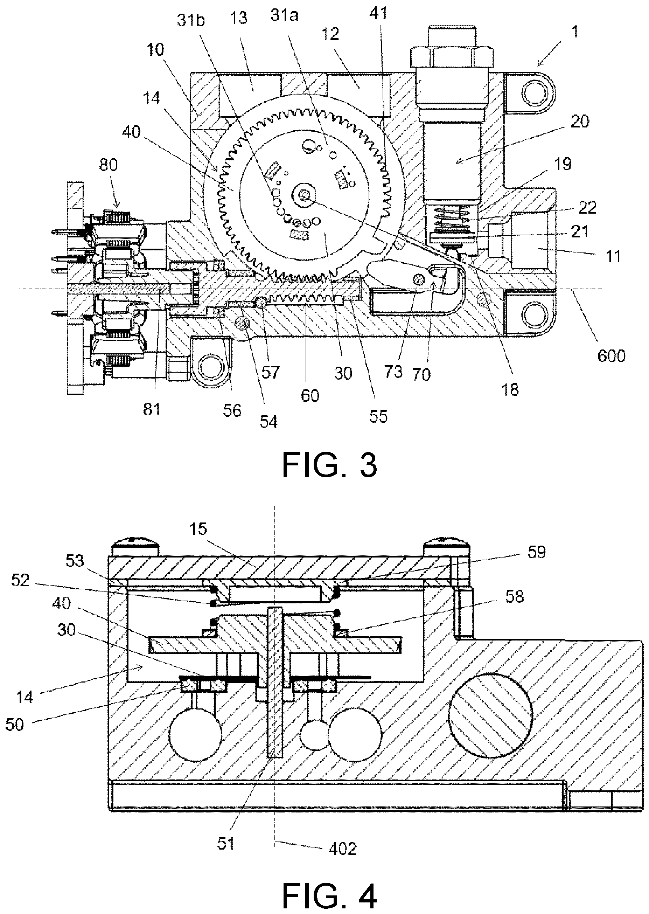

In this preferred embodiment the body 10 comprises an inlet hole which allows introducing the worm screw 60 inside the body 10. The worm screw 60 thereby comprises a first end arranged outside the body 10, said first end being coupled to the shaft 81 of the motor, and the rest of the worm screw 60 being housed in the body 10, as observed in detail in Figure 3. The gas tap 1 comprises a lip seal 56 arranged surrounding the worm screw 60 and supported against the body 10 to seal the inlet hole and thus maintain the tightness of said inlet port.

Furthermore, as shown in detail in Figure 3, the gas tap 1 of the preferred embodiment comprises a first bushing 54 arranged after the lip seal 56 and surrounding a first part 61 of the worm screw 60, and a second bushing 54 arranged surrounding a second part 62 of the worm screw 60, the toothed part 63 of the worm screw 60 being arranged between the first part 61 and the second part 62. Said bushings 54, 55 are housed in a respective retention housing of the body 10 such that said bushings 54, 55 keep the worm screw 60 centered and prevent radial displacement thereof.

In the preferred embodiment of the gas tap 1, the actuator element 40 comprises a protrusion 42 arranged on the perimeter of the actuator element 40 and protruding radially with respect to the perimeter of said actuator element 40. The protrusion 42 is configured to act indirectly on the plug element 21 of the safety valve 20.

Furthermore, the gas tap 1 of the preferred embodiment comprises a lever 70 arranged in the housing 14 and rotationally fixed to the body 10 by means of a rotation shaft 73. The lever 70 is configured to act on the plug element 21 of the safety valve 20 when the rotation of the actuator element 40 causes the protrusion 42 to act on the lever 70. The lever 70 comprises a first radial prolongation 71 configured to cooperate with the actuator element 40 and a second radial prolongation 72 configured to cooperate with the safety valve 20, the rotation shaft 73 being arranged between both radial prolongations 71, 72. In that sense, the second radial prolongation 72 of the lever 70 is configured to act on the plug element 21 of the safety valve 20, mechanically opening said safety valve 20 when the protrusion 42 of the actuator element 40 pushes the first radial prolongation 71 of the lever 70.

In this preferred embodiment the lever 70 comprises a rectangular prism-shaped central part 74, the first radial prolongation 71 extending perpendicularly from the proximity of one of the ends of the central part 74, and the second radial prolongation 72 extending perpendicularly from the proximity of the opposite end of the central part 74. The first radial prolongation 71 is arranged perpendicular to the second radial prolongation 72. The first radial prolongation comprises a hole that the rotation shaft 73 goes through.

As mentioned above, a worm gear allows reducing the speed by considerably increasing the output torque of the motor 80. Furthermore, the use of the lever 70 as an intermediate element between the actuator element 40 and the plug 21 also increases the force exerted on said plug 21. Therefore, as a result of the type of gear used and the use of the lever 70 as an intermediate element, a motor 80 with a low output torque, and therefore inexpensive, can be used to actuate the gas tap 1.

In the preferred embodiment of the gas tap 1, the regulating disc 30 is coupled to the actuator element 40 such that both parts rotate integrally, the actuator element 40 being what directly transmits the rotation to the regulating disc 30. To that end, the actuator element 40 comprises a central protrusion 43 and the regulating disc 30 comprises a central hole 32 with a shape complementary to the central protrusion 43 of the actuator element 40, the central protrusion 43 being housed in the central hole 32 such that both parts rotate integrally. The body 10 comprises a central hole 16 in which a shaft 51 is arranged, and the central protrusion 43 of the actuator element comprises a central hole 430, said central hole 430 going through the shaft 51 such that the actuator element 40 is configured to rotate with respect to said shaft 51.

Furthermore, in the preferred embodiment of the gas tap 1 the actuator element 40 comprises three pressure elements 44 which are prolonged perpendicularly from the surface 400 of the actuator element 40 which is arranged facing the regulating disc 30, said pressure elements 44 being configured to press the regulating disc 30 against the contact surface 140.

The gas tap 1 of the preferred embodiment comprises a sealing gasket 50 housed in the contact surface 140 surrounding the outlet hole 120, 130, the regulating disc 30 being arranged in a supported manner, pressing on said sealing gasket 50.

The gas tap 1 of the preferred embodiment also comprises a cover 15 attached to the body 10 that closes the housing 14 of the body 10 in a leak-tight manner. As shown in detail in Figure 4, the actuator element 40 is axially retained by means of a spring 52 that pushes the actuator element 40 at one of its ends, the other end of the spring 52 being supported in the cover 15. The gas tap 1 comprises a lower support part 58 manufactured in a low friction material, for example nylon, which is arranged between the actuator element 40 and the spring 52, and an upper support part 58 which is arranged between the cover 15 and the spring 52.

The gas tap 1 of the preferred embodiment comprises a second sealing gasket 53 arranged between the body 10 and the cover 15.

## Claims

1. Gas tap with a safety valve (20) for a gas cooking appliance, comprising
- a body (10) comprising
∘ a gas inlet conduit (11) fluidically connected with the safety valve (20),
∘ at least one gas outlet conduit (12, 13), and
∘ a housing (14) fluidically connected with the safety valve (20) and with said at least one outlet conduit (12, 13), the housing (14) comprising a contact surface (140) comprising at least one outlet hole (120, 130) fluidically connected with said at least one outlet conduit (12, 13),
- a regulating disc (30) comprising at least one regulation opening and arranged in the housing (14) of the body (10) over the contact surface (140), the regulating disc (30) being configured to regulate, by means of its rotation, the incoming gas flow from the safety valve (20) to said at least one outlet conduit (12, 13),
- an actuator element (40) housed in the body (10) wherein the actuator element (40) is a wheel comprising a plurality of teeth (41), the actuator element (40) being part of the gear,
- a motor (80) comprising an output shaft (81), and
- a gear coupled to the shaft (81) of the motor (80) and configured to transmit the movement of the motor (80) to the regulating disc (30),
**characterized in that** the actuator element (40) is configured to open the safety valve (20) by means of its rotation.

2. The gas tap according to claim 1, wherein the motor (80) is arranged outside the housing (14) of the body (10).

3. The gas tap according to claim 1 or 2, wherein the motor (80) is a BLDC motor.

4. The gas tap according to any of claims 1 to 3, wherein the gear comprises a worm screw (60), said worm screw (60) being coupled to the shaft (81) of the motor (80), and said worm screw (60) engaging with the teeth (41) of the actuator element (40).

5. The gas tap according to claim 4, comprising at least one bushing (54, 55) surrounding a part of the worm screw (60), said at least one bushing being housed in a retention housing for retaining the body (10) such that said at least one bushing (54, 55) keeps the worm screw (60) centered and prevents radial displacement thereof.

6. The gas tap according to claim 5, comprising a first bushing (54) arranged in a first part (61) of the worm screw (60) and a second bushing (55) arranged in a second part (62) of the worm screw (60), the toothed part (63) of the worm screw (60) being arranged between the first part (61) and the second part (62).

7. The gas tap according to any of claims 1 to 6, wherein the actuator element (40) comprises a protrusion (42) configured to act indirectly on a plug element (21) of the safety valve (20).

8. The gas tap according to claim 7, comprising a lever (70) arranged in the housing (14) and rotationally fixed to the body (10), a second radial prolongation (72) of the lever (70) being configured to act on the plug element (21) of the safety valve (20), opening said safety valve (20) when the protrusion (42) of the actuator element (40) pushes a first radial prolongation (71) of the lever (70).

9. The gas tap according to any of claims 1 to 8, wherein the regulating disc (30) is coupled to the actuator element (40) such that both parts rotate integrally.

10. The gas tap according to claim 9, wherein the actuator element (40) comprises a central protrusion (43) and the regulating disc (30) comprises a central hole (32) with a shape complementary to the central protrusion (43) of the actuator element (40), the central protrusion (43) being housed in the central hole (32) such that both parts rotate integrally.

11. The gas tap according to claim 9 or 10, wherein the actuator element (40) comprises at least one pressure element (44) that protrudes with respect to the surface (400) of the actuator element (40) which is arranged facing to the regulating disc (30), said at least one pressure element (44) being configured to press the regulating disc (30) against the contact surface (140).

12. The gas tap according to any of claims 1 to 11, comprising a sealing gasket (50) housed in the contact surface (140) surrounding the at least one outlet hole (120, 130), the regulating disc (30) being arranged in a supported manner, pressing on said sealing gasket (50).

13. The gas tap according to any of claims 1 to 8, wherein the regulating disc (30) is integrated in the actuator element (40) itself.

14. The gas tap according to any of claims 1 to 13, wherein the actuator element (40) is axially retained by means of a spring (52) that pushes the actuator element (40) at one of its ends, the other end of the spring (52) being supported in a cover (15) attached to the body (10) that closes the housing (14) of the body (10) in a leak-tight manner.

15. A gas cooking appliance comprising at least one gas tap (1) according to any of claims 1 to 14.

## Patentansprüche

1. Gashahn mit einem Sicherheitsventil (20) für ein Gaskochgerät, umfassend
- einen Körper (10), welcher Folgendes umfasst
∘ eine Gaseinlassleitung (11), welche mit dem Sicherheitsventil (20) fluidisch verbunden ist,
∘ mindestens eine Gasauslassleitung (12, 13), und
∘ ein Gehäuse (14), welches mit dem Sicherheitsventil (20) und mit der genannten mindestens einen Auslassleitung (12, 13) fluidisch verbunden ist, wobei das Gehäuse (14) eine Kontaktfläche (140) umfasst, welche mindestens ein Auslassloch (120, 130) umfasst, welches mit der genannten mindestens einen Auslassleitung (12, 13) fluidisch verbunden ist,
- eine Regelscheibe (30), welche mindestens eine Regelöffnung umfasst und im Gehäuse (14) des Körpers (10) über der Kontaktfläche (140) angeordnet ist, wobei die Regelscheibe (30) dazu ausgebildet ist, mittels deren Rotation, den einströmenden Gasfluss vom Sicherheitsventil (20) zur genannten mindestens einen Auslassleitung (12, 13) zu regeln,
- ein Aktuatorelement (40), welches im Körper (10) aufgenommen ist, wobei das Aktuatorelement (40) ein Rad ist, welches eine Vielzahl von Zähnen (41) umfasst, wobei das Aktuatorelement (40) Teil des Getriebes ist,
- einen Motor (80), welcher eine Ausgangswelle (81) umfasst, und
- ein Getriebe, welches mit der Welle (81) des Motors (80) gekoppelt ist und dazu ausgebildet ist, die Bewegung des Motors (80) auf die Regelscheibe (30) zu übertragen,
**dadurch gekennzeichnet, dass**
das Aktuatorelement (40) dazu ausgebildet ist, das Sicherheitsventil (20) mittels dessen Rotation zu öffnen.

2. Gashahn nach Anspruch 1, in welchem der Motor (80) außerhalb des Gehäuses (14) des Körpers (10) angeordnet ist.

3. Gashahn nach Anspruch 1 oder 2, in welchem der Motor (80) ein BLDC-Motor ist.

4. Gashahn nach einem der Ansprüche 1 bis 3, in welchem das Getriebe eine Schneckenschraube (60) umfasst, wobei die genannte Schneckenschraube (60) mit der Welle (81) des Motors (80) gekoppelt ist, und die genannte Schneckenschraube (60) in die Zähne (41) des Aktuatorelements (40) eingreift.

5. Gashahn nach Anspruch 4, umfassend mindestens eine Buchse (54, 55), welche einen Teil der Schneckenschraube (60) umgibt, wobei die genannte mindestens eine Buchse in einem Rückhaltegehäuse zum Zurückhalten des Körpers (10) aufgenommen ist, sodass die genannte mindestens eine Buchse (54, 55) die Schneckenschraube (60) zentriert hält und die radiale Verschiebung derselben verhindert.

6. Gashahn nach Anspruch 5, umfassend eine erste Buchse (54), welche in einem ersten Teil (61) der Schneckenschraube (60) angeordnet ist, und eine zweite Buchse (55), welche in einem zweiten Teil (62) der Schneckenschraube (60) angeordnet ist, wobei der verzahnte Teil (63) der Schneckenschraube (60) zwischen dem ersten Teil (61) und dem zweiten Teil (62) angeordnet ist.

7. Gashahn nach einem der Ansprüche 1 bis 6, in welchem das Aktuatorelement (40) einen Vorsprung (42) umfasst, welcher dazu ausgebildet ist, indirekt auf ein Stopfenelement (21) des Sicherheitsventils (20) zu wirken.

8. Gashahn nach Anspruch 7, umfassend einen Hebel (70), welcher im Gehäuse (14) angeordnet ist und am Körper (10) rotatorisch fixiert ist, wobei eine zweite radiale Verlängerung (72) des Hebels (70) dazu ausgebildet ist, auf das Stopfenelement (21) des Sicherheitsventils (20) zu wirken, indem das genannte Sicherheitsventil (20) geöffnet wird, wenn der Vorsprung (42) des Aktuatorelements (40) eine erste radiale Verlängerung (71) des Hebels (70) drückt.

9. Gashahn nach einem der Ansprüche 1 bis 8, in welchem die Regelscheibe (30) mit dem Aktuatorelement (40) gekoppelt ist, sodass beide Teile integral rotieren.

10. Gashahn nach Anspruch 9, in welchem das Aktuatorelement (40) einen zentralen Vorsprung (43) umfasst und die Regelscheibe (30) ein zentrales Loch (32) mit einer zum zentralen Vorsprung (43) des Aktuatorelements (40) komplementären Form umfasst, wobei der zentrale Vorsprung (43) im zentralen Loch (32) aufgenommen ist, sodass beide Teile integral rotieren.

11. Gashahn nach Anspruch 9 oder 10, in welchem das Aktuatorelement (40) mindestens ein Druckelement (44) umfasst, welches in Bezug auf die Oberfläche (400) des Aktuatorelements (40), welche der Regelscheibe (30) zugewandt angeordnet ist, hervorsteht, wobei das genannte mindestens eine Druckelement (44) dazu ausgebildet ist, die Regelscheibe (30) gegen die Kontaktfläche (140) zu drücken.

12. Gashahn nach einem der Ansprüche 1 bis 11, umfassend eine Dichtung (50), welche in der Kontaktfläche (140), das mindestens eine Auslassloch (120, 130) umgebend, aufgenommen ist, wobei die Regelscheibe (30) auf gestützte Weise angeordnet ist, sodass sie auf die genannte Dichtung (50) drückt.

13. Gashahn nach einem der Ansprüche 1 bis 8, in welchem die Regelscheibe (30) im Aktuatorelement (40) selbst integriert ist.

14. Gashahn nach einem der Ansprüche 1 bis 13, in welchem das Aktuatorelement (40) mittels einer Feder (52) axial zurückgehalten wird, welche das Aktuatorelement (40) an einem dessen Enden drückt, wobei das andere Ende der Feder (52) in einer am Körper (10) befestigten Abdeckung (15) gestützt ist, welche das Gehäuse (14) des Körpers (10) auf leckdichte Weise schließt.

15. Gaskochgerät umfassend mindestens einen Gashahn (1) nach einem der Ansprüche 1 bis 14.

## Revendications

1. Robinet à gaz avec une soupape de sécurité (20) pour un appareil de cuisson à gaz, comprenant
- un corps (10) comprenant
∘ un conduit d'entrée de gaz (11) relié par connexion de fluide avec la soupape de sécurité (20),
∘ au moins un conduit de sortie de gaz (12, 13), et
∘ un logement (14) relié par connexion de fluide avec la soupape de sécurité (20) et avec ledit au moins un conduit de sortie (12, 13), le logement (14) comprenant une surface de contact (140) comprenant au moins un orifice de sortie (120, 130) relié par connexion de fluide avec ledit au moins un conduit de sortie (12, 13),
- un disque de régulation (30) comprenant au moins une ouverture de régulation et disposé dans le logement (14) du corps (10) sur la surface de contact (140), le disque de régulation (30) étant configuré pour réguler, par le biais de sa rotation, le flux de gaz entrant à partir de la soupape de sécurité (20) vers ledit au moins un conduit de sortie (12, 13),
- un élément actionneur (40) logé dans les corps (10) dans lequel l'élément actionneur (40) est une roue comprenant une pluralité de dents (41), l'élément actionneur (40) faisant partie de l'engrenage,
- un moteur (80) comprenant un arbre de sortie (81), et
- un engrenage couplé à l'arbre (81) du moteur (80) et configuré pour transmettre le mouvement du moteur (80) au disque de régulation (30),
**caractérisé en ce que**
l'élément actionneur (40) est configuré pour ouvrir la soupape de sécurité (20) par le biais de sa rotation.

2. Robinet à gaz selon la revendication 1, dans lequel le moteur (80) est disposé à l'extérieur du logement (14) du corps (10).

3. Robinet à gaz selon la revendication 1 ou 2, dans lequel le moteur (80) est un moteur BLDC.

4. Robinet à gaz selon l'une quelconque des revendications 1 à 3, dans lequel l'engrenage comprend une vis sans fin (60), ladite vis sans fin (60) étant couplée à l'arbre (81) du moteur (80), et ladite vis sans fin (60) s'engageant avec les dents (41) de l'élément actionneur (40).

5. Robinet à gaz selon la revendication 4, comprenant au moins une douille (54, 55) entourant une partie de la vis sans fin (60), ladite au moins une douille étant logée dans un logement de rétention pour retenir le corps (10) de telle sorte que ladite au moins une douille (54, 55) maintient la vis sans fin (60) centrée et empêche le déplacement radial de celle-ci.

6. Robinet à gaz selon la revendication 5, comprenant une première douille (54) disposée dans une première partie (61) de la vis sans fin (60) et une deuxième douille (55) disposée dans une deuxième partie (62) de la vis sans fin (60), la partie dentée (63) de la vis sans fin (60) étant disposée entre la première partie (61) et la deuxième partie (62).

7. Robinet à gaz selon l'une quelconque des revendications 1 à 6, dans lequel l'élément actionneur (40) comprend une saillie (42) configurée pour agir indirectement sur un élément d'obturation (21) de la soupape de sécurité (20).

8. Robinet à gaz selon la revendication 7, comprenant un levier (70) disposé dans le logement (14) et fixé en rotation au corps (10), un deuxième prolongement radial (72) du levier (70) étant configuré pour agir sur l'élément d'obturation (21) de la soupape de sécurité (20), ouvrant ladite soupape de sécurité (20) lorsque la saillie (42) de l'élément actionneur (40) pousse un premier prolongement radial (71) du levier (70).

9. Robinet à gaz selon l'une quelconque des revendications 1 à 8, dans lequel le disque de régulation (30) est couplé à l'élément actionneur (40) de telle sorte que les deux parties tournent intégralement.

10. Robinet à gaz selon la revendication 9, dans lequel l'élément actionneur (40) comprend une saillie centrale (43) et le disque de régulation (30) comprend un orifice central (32) avec une forme complémentaire à la saillie centrale (43) de l'élément actionneur (40), la saillie centrale (43) étant logée dans l'orifice central (32) de telle sorte que les deux parties tournent intégralement.

11. Robinet à gaz selon la revendication 9 ou 10, dans lequel l'élément actionneur (40) comprend au moins un élément de pression (44) qui fait saillie par rapport à la surface (400) de l'élément actionneur (40) qui est disposée faisant face au disque de régulation (30), ledit au moins un élément de pression (44) étant configuré pour presser le disque de régulation (30) contre la surface de contact (140).

12. Robinet à gaz selon l'une quelconque des revendications 1 à 11, comprenant un joint d'étanchéité (50) logé dans la surface de contact (140) entourant l'au moins un orifice de sortie (120, 130), le disque de régulation (30) étant disposé d'une manière supportée, faisant pression sur ledit joint d'étanchéité (50).

13. Robinet à gaz selon l'une quelconque des revendications 1 à 8, dans lequel le disque de régulation (30) est intégrée dans l'élément actionneur (40) lui-même.

14. Robinet à gaz selon l'une quelconque des revendications 1 à 13, dans lequel l'élément actionneur (40) est retenu axialement par le biais d'un ressort (52) qui pousse l'élément actionneur (40) à l'une de ses extrémités, l'autre extrémité du ressort (52) étant supportée dans un couvercle (15) attachée au corps (10) qui ferme le logement (14) du corps (10) d'une manière étanche.

15. Appareil de cuisson à gaz comprenant au moins un robinet à gaz (1) selon l'une quelconque des revendications 1 à 14.
